(19) Europäisches Patentamt
European Patent Office
Office européen des brevets

(11) Veröffentlichungsnummer: **0 017 883**
**B1**

(12) # EUROPÄISCHE PATENTSCHRIFT

(45) Veröffentlichungstag der Patentschrift: **21.10.81**

(51) Int. Cl.³: **C 07 C119/042**, C 07 C147/14, C 07 C149/30, C 08 G 18/77, C 08 G 71/04

(21) Anmeldenummer: **80101845.8**

(22) Anmeldetag: **05.04.80**

(54) **Neue, schwefelhaltige Diisocyanate, ein Verfahren zu ihrer Herstellung, sowie ihre Verwendung als Aufbaukomponente bei der Herstellung von Polyurethanen.**

(30) Priorität: **20.04.79 DE 2916135**

(43) Veröffentlichungstag der Anmeldung: **29.10.80 (Patentblatt 80/22)**

(45) Bekanntmachung des Hinweises auf die Patenterteilung: **21.10.81 Patentblatt 81/42**

(84) Benannte Vertragsstaaten: **AT BE CH DE FR GB IT LI NL SE**

(56) Entgegenhaltungen:
**DE - A1 - 2 331 794**
**DE - A1 - 2 450 083**
**US - A - 3 330 848**
**US - A - 3 454 606**

(73) Patentinhaber: **BAYER AG**
**Zentralbereich Patente, Marken und Lizenzen**
**D-5090 Leverkusen 1, Bayerwerk (DE)**

(72) Erfinder: **Schwindt, Jürgen, Dr.**
**Kleist-Platz 4**
**D-5090 Leverkusen 1 (DE)**
Erfinder: **Grögler, Gerhard, Dr.**
**von Diergardt-Strasse 46**
**D-5090 Leverkusen 1 (DE)**
Erfinder: **Ganster, Otto, Dr.**
**Berliner Strasse 64a**
**D-5090 Leverkusen 1 (DE)**
Erfinder: **Koster, Johannes, Dr.**
**Haus Nr. 30**
**D-6497 Steinau-Neustall (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Neue, schwefelhaltige Diisocyanate, ein Verfahren zu ihrer Herstellung, sowie ihre Verwendung als Aufbaukomponente bei der Herstellung von Polyurethanen

Die vorliegende Erfindung betrifft neue Schwefel enthaltende Diisocyanate, bei denen eine Mercapto-, Sulfoxo- oder Sulfon-Gruppe, zwei aromatische Kerne bzw. einen aromatischen Kern und einen aliphatischen Rest verbindet und wobei mindestens eine der aromatisch gebundenen NCO-Gruppen in ortho-Stellung zum Schwefelatom steht, sowie ein Verfahren zur Herstellung der neuen Diisocyanate und ihre Verwendung zur Herstellung von Polyurethankunststoffen.

Aromatische Diisocyanate, deren aromatische Kerne durch Schwefel verbunden sind und deren NCO-Gruppen in p.p.'- bzw. m.m'- bzw. o.o'-Stellung zum Schwefelatom stehen sind bekannt (JA 74-048196 ; JA 38985/71). Bislang noch nicht bekannt geworden sind die Schwefel enthaltenden Diisocyanate, deren aromatisch gebundenen NCO-Gruppen in o.p'-Stellung zum Schwefelatom stehen und Schwefel enthaltende Diisocyanate, die eine aromatisch gebundene und eine aliphatisch gebundene NCO-Gruppe aufweisen, wobei die aromatisch gebundene NCO-Gruppe in ortho-Stellung zum Schwefelatom steht. Es handelt sich bei diesen Verbindungen um neue interessante Aufbaukomponenten für Polyurethane, die die Herstellung insbesondere von Polyurethanelastomeren eines ausgezeichneten mechanischen Werteniveaus gestatten, und die schließlich infolge der stark unterschiedlichen Reaktivität ihrer NCO-Gruppen für gezielte Umsetzungen mit Zerewitinoffaktiven Verbindungen verwendet werden können.

Besonders überraschend ist der Befund, daß nicht nur die erfindungsgemäßen aromatisch-aliphatischen Diisocyanate Isocyanatgruppen einer stark unterschiedlichen Reaktivität aufweisen, sondern daß auch die erfindungsgemäßen Diisocyanate mit ausschließlich aromatisch gebundenen Isocyanatgruppen diese Eigenschaft zeigen, wobei überraschenderweise die in ortho-Stellung zum Schwefel angeordnete Isocyanatgruppe eine ca. 10-fach höhere Reaktivität gegenüber aktive Wasserstoffatome enthaltenden Verbindungen als die in para-Stellung angeordnete Isocyanatgruppe aufweist. Diese unterschiedliche Reaktionsbereitschaft der beiden Isocyanatgruppen liegt bereits bei den unsubstituierten erfindungsgemäßen Diisocyanaten vor. Sie kann durch Elektronen anziehende Substituenten in para-Stellung zur, bezüglich des Schwefelatoms, in ortho-Stellung angeordneten Isocyanatgruppe und/oder durch, eine sterische Hinderung der, bezüglich des Schwefelatoms in para-Stellung angeordneten, Isocyanatgruppe bewirkende Substituenten in ortho-Stellung zu dieser Isocyanatgruppe noch verstärkt werden.

Die nachstehend näher beschriebenen erfindungsgemäßen Diisocyanate stellen somit besonders wertvolle Ausgangsmaterialien zur Herstellung von Polyurethankunststoffen dar. Sie eignen sich insbesondere zur Herstellung von Polyurethankunststoffen nach dem Präpolymer- bzw. "one shot"-Verfahren unter Verwendung von schnell reagierenden Kettenverlängerungsmitteln, wobei wegen der relativen Reaktionsträgheit der langsamer reagierenden Isocyanatgruppe eine ausreichend lange Tropfzeit und gleichzeitig eine erwünschte kurze Formstandzeit erreichbar sind. Mit den erfindungsgemäßen Diisocyanaten hergestellte Polyurethanformkörper erreichen ferner, verglichen mit den aus bekannten Diisocyanaten wie z.B. 4,4'-Diisocyanatodiphenylmethan oder 2,4'-Diisocyanatodiphenylmethan hergestellten Formkörpern, wesentlich schneller die Knickbruchfestigkeit, die eine zerstörungsfreie Entformung des Formkörpers zuläßt.

Gegenstand der vorliegenden Erfindung sind Diisocyanate der Formel

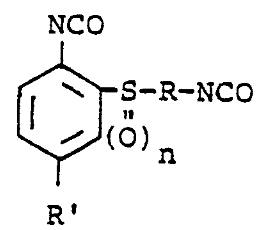

in welcher

R für einen gesättigten aliphatischen Kohlenwasserstoffrest mit 2 bis 12 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Brom- oder Chlor-Substituenten oder einen Substituenten der Formel – R", – O – R", – S – R", oder – $SO_2$ – R", aufweisenden para-Phenylen-Rest steht,

R' für Wasserstoff, Brom, Chlor, – $SO_2$ – R", – OR" oder – SR" steht,

R" für einen Alkylrest mit 1 bis 4 Kohlenstoffatomen steht und

n für 0, 1 oder 2 steht.

Gegenstand der vorliegenden Erfindung ist auch ein Verfahren zur Herstellung dieser Diisocyanate, welches dadurch gekennzeichnet ist, daß man Diamine der Formel

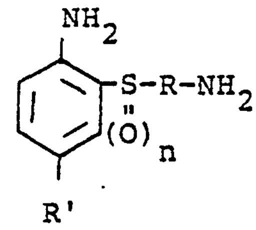

in welcher
R, R' und n die genannte Bedeutung haben,
einer an sich bekannten Phosgenierungsreaktion unterzieht.

Gegenstand der vorliegenden Erfindung ist schließlich auch die Verwendung der neuen Diisocyanate als Aufbaukomponente bei der Herstellung von Polyurethankunststoffen nach dem Isocyanat-Polyadditionsverfahren.

Die neuen Diisocyanate werden erfindungsgemäß durch Phosgenierung von Diaminen der Formel

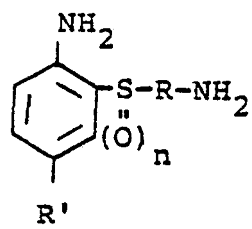

erhalten, wobei
R, R' und n die obengenannte Bedeutung haben.

Vorzugsweise werden solche Diamine der genannten allgemeinen Formel eingesetzt, bei welchen
R für einen gesättigten aliphatischen Kohlenwasserstoffrest mit 2 bis 6 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Chlor-oder $C_1$-$C_4$-Alkyl-Substituenten aufweisenden, p-Phenylen-Rest steht,
R' für Wasserstoff steht und
n für 0 steht.

Demzufolge handelt es sich bei den bevorzugten erfindungsgemäßen Diisocyanaten um solche der Formel

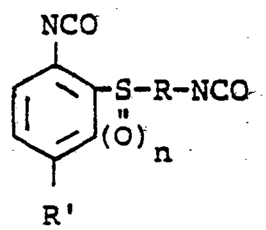

in welcher
R, R' und n die zuletzt genannte Bedeutung haben.

Die als Ausgangsmaterialien beim erfindungsgemäßen Verfahren einzusetzenden, Thioethergruppen aufweisende Diamine sind nach bekannten Methoden des Standes der Technik zugänglich.

Die erfindungsgemäß einzusetzenden, Thioethergruppen aufweisenden (n = 0) Ausgangsamine mit einer aliphatisch gebundenen Aminogruppe sind beispielsweise in Analogie zum Verfahren der DE-OS 27 34 575 durch Umsetzung der entsprechenden Natrium-amino-thiophenolate der Formel

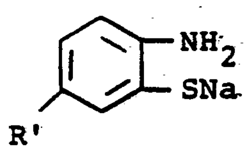

mit entsprechenden Chloraminen der Formel

$$Cl-R-NH_2$$

zugänglich, wobei die genannten Natriumthiophenolate auf einfache Weise durch alkalische Verseifung der entsprechenden Benzothiazole erhalten werden können.

Die beim erfindungsgemäßen Verfahren ebenfalls einsetzbaren, ausschließlich aromatisch gebundene Aminogruppen und Thioethergruppen aufweisenden Diamine können beispielsweise durch Umsetzung der bereits genannten, o-aminosubstituierten Natrium-thiophenolate mit den entsprechenden, gegebenenfalls in o-Stellung zur Nitrogruppe Substituenten der oben beispielhaft genannten Art aufweisenden, p-Nitro-chlorbenzolen der Formel

$$Cl-R-NO_2$$

zu den entsprechenden eine Amino- und eine Nitrogruppe aufweisenden Zwischenstufen umgesetzt werden, worauf sich eine Hydrierung der Nitrogruppe zur Aminogruppe, beispielsweise mittels Zink/Chlorwasserstoff oder unter Verwendung von Ranney-Nickel als Katalysator, anschließt. Die Herstellung der genannten Zwischenstufe wird in Prinzip beispielsweise in J. Chem. Soc. London *1930,* 180 ff beschrieben.

Eine weitere Methode zur Herstellung von 2 aromatisch gebundene Aminogruppen aufweisenden Thioethern besteht beispielsweise in der Umsetzung der zuletzt genannten p-Nitrochlorbenzole mit Natriumsulfid zu den entsprechenden p-Amino-thiophenolaten der Formel

$$H_2N-R-SNa$$

und deren anschließender Kondensation mit o-Chlor-nitrobenzolen der Formel

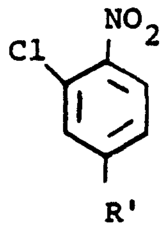

worauf sich auch hier wieder eine Hydrierung der noch vorliegenden Nitrogruppe anschließt. Die Herstellung der eine Aminogruppe und eine Nitrogruppe aufweisenden Zwischenstufe nach diesem Prinzip ist beispielsweise in J. Chem. Soc. London *1930,* 180 beschrieben.

Schließlich sind die Thioethergruppen aufweisenden erfindungsgemäß einzusetzenden Diamine mit 2 aromatisch gebundenen Aminogruppen auch durch Umsetzung der entsprechenden o-Nitro-thiophenolate mit den entsprechenden p-Nitrochlorbenzolen bzw. durch Umsetzung der entsprechenden p-Nitro-thiophenolate mit den entsprechenden o-Nitro-chlorbenzolen zu der 2 Nitrogruppen aufweisenden Zwischenstufe und deren anschließende Hydrierung zugänglich. Die Herstellung der bei dieser Methode vorliegenden Zwischenstufe ist beispielsweise in Journal of the American Chemical Society *45,* 1399 ff beschrieben.

Die Überführung der Thioethergruppen aufweisenden Diamine in die entsprechenden Sulfoxide bzw. Sulfone geschieht in an sich bekannter Weise entweder am Nitrogruppen aufweisenden Zwischenprodukt (Oxidation mit Kaliumbichromat) oder durch direkte Oxidation der Thioethergruppen aufweisenden Diamine. So können beispielsweise die Thioethergruppen aufweisenden Diamine bei ca. 20 °C unter Verwendung einer äquivalenten Menge an Wasserstoffperoxid als Oxidationsmittel ohne weiteres in die entsprechenden Sulfoxide überführt werden. Zur Oxidation der Thioethergruppen aufweisenden Diamine in die entsprechenden Sulfone empfiehlt sich eine Blockierung der Aminogruppen beispielsweise durch Acetylierung, worauf sich die Oxidation unter Verwendung eines Überschusses an Wasserstoffperoxid unter Rückflußbedingungen anschließt. Anschließend wird die Schutzgruppe beispielsweise durch Verseifung mit Natronlauge entfernt.

Für das erfindungsgemäße Verfahren geeignete Diamine sind beispielsweise 2-(2'-Aminoethylthio)-anilin, 2-(6'-Aminohexylthio)-anilin, 2-(12'-Aminododecylthio)-anilin, 2-(2'-Aminoethylthio)-5-methoxy-anilin, 2-(2'-Aminoethylthio)-5-chlor-anilin, 2-(6'-Aminohexylthio)-5-ethylsulfono-anilin, 2,4'-Diamino-diphenylsulfid, 2,4'-Diamino-3'-ethylthio-diphenylsulfid, 2,4'-Diamino-3'-ethylsulfonodiphenylsulfid, 2,4'-Diamino-5-chlor-diphenylsulfid, 2,4'-Diamino-5-chlor-3'-ethyl-diphenylsulfid, 2,4'-Diamino-5-chlor-3'-ethylthiodiphenylsulfid, 2,4'-Diamino-5-ethylsulfono-diphenylsulfid, 2,4'-Diamino-5-ethylsulfono-3'-ethylsulfono-diphenylsulfid, 2,4'-Diamino-5-methoxy-diphenylsulfid, 2,4'-Diamino-5-methoxy-3'-i-propyl-diphenylsulfid, 2,4'-Diamino-5-methoxy-3'-ethylthio-diphenylsulfid, 2,4'-Diamino-diphenylsulfoxid,

2,4'-Diamino-3'-ethyl-diphenylsulfoxid, 2,4'-Diamino-5-chlor-3'-ethyl-diphenylsulfoxid, 2,4'-Diamino-5-methoxy-diphenylsulfoxid, 2,4'-Diamino-5-ethoxy-3'-ethylmercapto-diphenylsulfoxid, 2-(2'-Aminoethylsulfoxo)-anilin, 2-(6'-Aminohexylsulfoxo)-5-chlor-anilin, 2-(2'-Aminoethylsulfoxo)-5-ethoxy-anilin, 2,4'-Diaminodiphenylsulfon, 2,4'-Diamino-3'-i-propyl-diphenylsulfon, 2,4'-Diamino-5-chlor-3'-ethyl-diphenylsulfon, 2,4'-Diamino-5-chlor-3'-ethyl-diphenylsulfon, 2,4'-Diamino-5-ethoxy-3'-ethyldiphenylsulfon, 2-(2'-Aminoethylsulfono)-anilin, 2-(6'-Aminohexyl-sulfono)-anilin, 2-(6'-Aminohexylsulfono)-5-Chlor-anilin, 2-(2'-Amino-ethylsulfono)-5-methoxyanilin oder 2-(6'-Aminohexylthio)-5-methylthioanilin.

Das erfindungsgemäße Verfahren, d.h. die Phosgenierung der beispielhaft genannten Diamine zu den entsprechenden Diisocyanaten erfolgt nach an sich bekannten Methoden, vorzugsweise unter Mitverwendung eines geeigneten Hilfslösungsmittels wie z.B. Chlorbenzol bei −20 bis 130 °C.

Geeignete Phosgenierverfahren sind beispielsweise in High Polymers XVI «Polyurethanes», Chemistry and Technology, Part I, Interscience Publishers, New York, London 1962, Seiten 17 ff beschrieben.

Die bei dieser Phosgenierungsreaktion anfallenden Diisocyanate entsprechen naturgemäß bezüglich ihrer Konstitution den beispielhaft genannten, als Ausgangsmaterial eingesetzten Diaminen. Typische erfindungsgemäße Diisocyanate sind z.B. die in den nachstehenden Ausführungsbeispielen beschriebenen Verbindungen.

Die erfindungsgemäßen Diisocyanate sind grundsätzlich auch auf andere, hier nicht beanspruchte, Weise zugänglich, beispielsweise durch Phosgenierung der entsprechenden N-[o-Aminophenylmercaptoalkyl-(bzw.-phenyl)]-O-(tert.-butyl)-urethane (vgl. Beispiel 2c).

Die erfindungsgemäßen Diisocyanate stellen wertvolle Ausgangsmaterialien zur Herstellung von Polyurethanen, insbesondere Polyurethan-Elastomeren und Polyurethanschaumstoffen, dar. Als Reaktionspartner für die Thiogruppenhaltigen erfindungsgemäßen Diisocyanate kommen alle, in der Polyurethanchemie an sich bekannten Reaktionspartner für organische Diisocyanate in Betracht.

Diese Reaktionspartner für die Diisocyanate weisen vorzugsweise mindestens zwei gegenüber Isocyanatgruppen reaktionsfähige Wasserstoffatome, d.h. mindestens zwei Aminogruppen, Thiolgruppen, Carboxylgruppen oder insbesondere Hydroxylgruppen und ein Molekulargewicht von 62 bis 10 000, vorzugsweise 1 000 bis 6 000 auf. Geeignete Reaktionspartner sind einfache mehrwertige Alkohole ebenso wie die an sich bekannten Polyhydroxypolyester, -polyäther, -polythioäther, -polyacetale, -polycarbonate oder -polyesteramide, wie sie für die Herstellung von homogenen und von zellförmigen Polyurethanen an sich bekannt sind. Geeignete einfache mehrwertige Alkohole sind z.B. Äthylenglykol, 1,2-Propylenglykol, 1,4-Butandiol.

1,6-Hexandiol, Glycerin, Trimethylolpropan, Erythrit, Pentaacrythrit, Sorbit, Sucrose. Insbesondere als Kettenverlängerer sind auch Amine wie z.B. Toluylendiamin, Phenylendiamin, Diaminodiphenyldisulfit, 2,2'- bzw. 4,4'-Alkylendithiodianiline, Diaminoäthan, Hexamethylendiamin, 3,3'-Dichlor-4,4'-diaminodiphenylmethan, 4,4'-Diaminodiphenylmethan geeignet.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z. B. ω-Hydroxycapronsäure, sind einsetzbar.

Auch die erfindungsgemäß in Frage kommenden, mindestens zwei, in der Regel zwei bis aucht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole oder Amine, z.B. Äthylenglykol, Propylenglykol-(1,3) oder -(1,2), Trimethylolpropan, 4,4'-Dihydroxydiphenylpropan, Anilin, Ammoniak, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH-Gruppen im

Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z.B. Diphenylcarbonat, oder mit Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Vertreter dieser erfindungsgemäß zu verwendenden Verbindungen sind z.B. in High Polymers, Vol. XVI, «Polyurethanes, Chemistry and Technology», verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, beschrieben.

Bei der Herstellung von Polyurethanschaumstoffen werden oft Wasser und/oder leicht flüchtige organische Substanzen als Treibmittel mitverwendet. Als organische Treibmittel kommen z.B. Aceton, Äthylacetat, Methanol, Äthanol halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß werden ferner oft Katalysatoren mitverwendet. Als mitzuverwendende Katalysatoren kommen solche der an sich bekannten Art in Frage, z.B. tertiäre Amine, wie Triäthylamin, Tributylamin, N-Methyl-morpholin, N-Äthyl-morpholin, N-Cocomorpholin, N,N,N',N'-Tetramethyl-äthylendiamin, 1,4-Diazabicyclo-(2,2,2)-octan, N-Methyl-N'-dimethyl-aminoäthyl-piperazin, N,N-Dimethylbenzylamin, Bis-(N,N-diäthylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-β-phenyläthylamin, 1,2-Dimethylimidazol, 2-Methylimidazol.

Gegenüber Isocyanatgruppen aktive Wasserstoffatome aufweisende tertiäre Amine sind z.B. Triäthanolamin, Triisopropanolamin, N-Methyl-diäthanolamin, N-Äthyl-diäthanolamin, N,N-Dimethyläthanolamin, sowie deren Umsetzungsprodukte mit Alkylenoxiden wie Propylenoxid und/oder Äthylenoxid.

Als Katalysatoren kommen ferner Silaamine mit Kohlenstoff-Silizium-Bindungen, wie sie z.B. in der deutschen Patentschrift 1 229 290 beschrieben sind, in Frage, z.B. 2,2,4-Trimethyl-2-silamorpholin, 1,3-Diäthylaminomethyl-tetramethyldisiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-äthylhexoat und Zinn (II)-laurat und die Dialkylzinnsalze von Carbonsäuren, wie z.B. Dibutyl-zinndiacetat, Dibutylzinn-dilaurat, Dibutylzinn-maleat oder Dioctylzinndiacetat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 62 bis 10 000, eingesetzt.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyäthersiloxane in Frage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in der amerikanischen Patentschrift 2 764 565 beschrieben.

Erfindungsgemäß können ferner auch Reaktionsverzögerer, z.B. sauer reagierende Stoffe wie Salzsäure oder organische Säurehalogenide und/oder organische Säureanhydride, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat oder Ammoniumphosphat und -Polyphosphat, ferner Stabilisatoren gegen Alterungs- und Witterungseinflüsse, Weichmacher und fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwendenden overflächenaktiven zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VI, herausgegeben von Vieweg und Höchtlen, Carl-Hanser-Verlag, München 1966, z.B. auf den Seiten 121 bis 205 beschrieben.

Bei der Herstellung von Polyurethankunststoffen unter Verwendung der erfindungsgemäßen Diisocyanate kommen die Reaktionspartner im allgemeinen in Mengenverhältnissen zum Einsatz, die einem Äquivalentverhältnis von Isocyanatgruppen gegenüber mit Isocyanatgruppen reaktionsfähigen Gruppen von 0,9: 1 bis 1,5: 1 entspricht, wobei man nach dem bekannten one shot Verfahren oder nach dem Prepolymerverfahren arbeiten kann. Beim Prepolymerverfahren werden bekanntlich die als Ausgangsmaterial eingesetzten Polyisocyanate in einer ersten Reaktionsstufe mit nur einem Teil der Reaktionspartner zur Reaktion gebracht, worauf sich im allgemeinen eine Kettenverlängerungsreaktion der als Zwischenprodukt erhaltenen NCO-Präpolymeren anschließt.

Die erfindungsgemäßen Diisocyanate eignen sich infolge ihrer stark unterschiedlich reaktiven NCO-Gruppen hervorragend zur Herstellung von Polyurethankunststoffen nach dem Präpolymerprinzip.

Die folgenden Beispiele dienen zur weiteren Erläuterung der Erfindung.

## Beispiel 1

a) 2-(6'-Aminohexylthio)-anilin

Zu 1 Mol o-Aminothiophenol-Na-Lösung in 400 ml Wasser werden ca. 200 ml Methanol hinzugefügt und bei 70 °C eine Lösung von 1 Mol 6-Chlorhexylaminhydrochlorid in ca. 250 ml $H_2O$ hinzugetropft. Man kocht 4 Stunden unter Rückfluß, kühlt ab und stellt mit Natronlauge stark alkalisch. Die organische Phase wird abgetrennt und im Hochvakuum destilliert.

**Analyse**

| Element | C | H | N | S |
|---|---|---|---|---|
| Berechnet | 64,2 | 8,9 | 12,5 | 14,3 |
| Gefunden | 64,1 | 9,1 | 12,3 | 14,4 |

b) 2-(6-Isocyanatohexylthio)-phenylisocyanat

In eine Lösung von 160 g Phosgen in 1,5 l 1,2-Dichlorethan werden bei −5 °C innerhalb von 5 Minuten 89 g (0,4 Mol) 2-(6-Aminohexylthio)anilin, gelöst in 0,5 l 1,2-Dichlorethan getropft. Innerhalb von 2 Stunden wird bis zum Rückfluß erhitzt (80 °C), bei dieser Temperatur weiteres Phosgen eingeleitet und 1 Stunde unter Rückfluß phosgeniert. Danach wird 1 Stunde mit Stickstoff überschüssiges Phosgen ausgespült, die Lösung eingeengt und das Rohprodukt destilliert. Erhalten werden 96 g 2-(6'-Isocyanatohexylthio)-phenylisocyanat (87 % der Theorie).

$Kp_{0,4}$ = 170 °C

NCO-Gehalt (berechnet) = 30,4 %

NCO-Gehalt (gefunden) = 30,4 %

Chlorgehalt = 0,01 %

| Analyse | | | | | |
|---|---|---|---|---|---|
| Element | C | H | N | O | S |
| Berechnet | 60,8 | 5,8 | 10,1 | 11,6 | 11,6 |
| Gefunden | 60,5 | 5,9 | 10,2 | 11,3 | 12,0 |

c) 2-(6-Isocyanatohexylthio)-phenylisocyanat

Zu einem Gemisch aus 323 g 1-Chlorhexylisocyanat-6 und 0,3 g Zinn-II-ethylhexoat werden bei 70 bis 80 °C innerhalb einer Stunde 148 g (2 Mol) tert.-Butanol getropft. Das Gemisch wird 2 Stunden bei 80 °C gerührt. Das entstandene Chlorhexyl-O-(tert.-butyl)-urethan wird in 400 ml Methanol gelöst und bei 60 bis 70 °C zu einer Lösung von o-Aminothiophenolnatrium (2 Mol) in 400 ml Methanol/400 ml $H_2O$ getropft. Man kocht 3 Stunden unter Rückfluß, kühlt ab und stellt mit Natronlauge stark alkalisch. Die organische Phase wird abgetrennt und über $Na_2SO_4$ getrocknet. Man erhält das N-[6-(o-Aminophenylmercapto)-hexyl]-O-(tert.-butyl)-urethan in einer Ausbeute von 90 bis 95 % der Theorie.

200 g dieser Verbindung werden in 300 ml Dichlorbenzol gelöst und bei Raumtemperatur zu einer Lösung von 200 g Phosgen in 500 ml Dichlorbenzol getropft. Bei weiterer Phosgenzugabe wird die Reaktionstemperatur langsam auf 140 °C gesteigert. Anschließend wird unter weiterem Einleiten von Phosgen 2 Stunden auf Rückfluß erhitzt. Schließlich wird unter allmählichem Abkühlen der Reaktionslösung überschüssiges Phosgen durch 45-minütiges Einleiten von Stickstoff ausgespült, die Lösung eingeengt und das Produkt unter Vakuum destilliert. Es werden 145 g 2-(6'-Isocyanatohexylthio)-phenylisocyanat (85 % der Theorie) erhalten.

NCO-Gehalt (berechnet) = 30,4 %
NCO-Gehalt (gefunden) = 30 %
Chlorgehalt = 0,02 %

## Beispiel 2

a) 2-(2'-Aminoethylthio)-anilin

Zu 1 Mol o-Aminothiophenol-Na-Lösung in 400 ml Wasser werden ca. 200 ml Methanol hinzugefügt und bei 70 °C eine Lösung von 1 Mol Chlorethylaminhydrochlorid in ca. 200 ml $H_2O$ hinzugetropft. Man kocht 3 Stunden unter Rückfluß, kühlt ab und stellt mit Natronlauge stark alkalisch. Die organische Phase wird abgetrennt und im Hochvakuum destilliert.

| Analyse | | | | |
|---|---|---|---|---|
| Element | C | H | N | S |
| Berechnet | 57,1 | 7,1 | 16,6 | 19 |
| Gefunden | 57,0 | 7,0 | 16,4 | 18,8 |

b) 2-(2-Isocyanatoethylthio)-phenylisocyanat

In eine Lösung von 200 g Phosgen in 2 l 1,2-Dichlorethan werden bei −5 °C innerhalb von 10 Minuten 84 g (0,5 Mol) 2-(2-Aminoethylthio)anilin, gelöst in 0,5 l 1,2-Dichlorethan, getropft. Danach wird wie unter Beispiel 1 beschrieben weiter verfahren. Erhalten werden 90 g 2-(2-Isocyanatoethylthio)-phenylisocyanat (82 % der Theorie).

$Kp_{0,22}$ = 128 °C
NCO-Gehalt (berechnet) = 38,1 %
NCO-Gehalt (gefunden) = 37,45 %
Chlorgehalt = 0,01 %

| Analyse | | | | | |
|---|---|---|---|---|---|
| Element | C | H | N | O | S |
| Berechnet | 54,5 | 3,6 | 12,7 | 14,5 | 14;5 |
| Gefunden | 54,6 | 3,5 | 12,7 | 14,4 | 14,6 |

## Beispiel 3

a) 2-(2-Aminoethylsulfono)-anilin

1 Mol 2-(2-Aminoethylthio)-anilin und 2 Mol Triethylamin werden in 2,5 l Toluol gelöst und 2 Mol Acetylchlorid unter Kühlung hinzugetropft. Man rührt 2 Stunden bei 60 °C nach, läßt abkühlen und saugt ab.

1 Mol des 2-(2-Acetamidoethylthio)-acetanilids werden in 800 ml Wasser vorgelegt und die Mischung auf 80 °C erhitzt. Man tropft 2,5 Mol 35 %ige $H_2O_2$-Lösung hinzu, wobei der Ansatz infolge exothermer Reaktion unter Rückfluß kocht. Man rührt bei 100 °C nach, kühlt ab und versetzt vorsichtig mit 2,5 Mol NaOH. Man kocht eine weitere Stunde bei 100 °C zur Abspaltung der Acetyl-Gruppen. Die organische Phase wird abgetrennt und über $Na_2SO_4$ getrocknet.

| Analyse | | | | | |
|---|---|---|---|---|---|
| Element | C | H | N | O | S |
| Berechnet | 48 | 6 | 14 | 16 | 16 |
| Gefunden | 47,8 | 6,2 | 13,7 | 16,1 | 16,2 |

b) 2-(2'-Isocyanatoethylsulfono)-phenylisocyanat

In eine Lösung von 200 g Phosgen in 1,5 l Chlorbenzol werden bei −5 °C innerhalb von 10 Minuten 200 g (1 Mol) 2-(2'-Amino-ethylsulfono)-anilin, gelöst in 1 l Chlorbenzol, getropft. Danach wird nach Beispiel 1 weiterverfahren. Erhalten werden 218 g 2-(2'-Isocyanatoalkylsulfono)-phenylisocyanat (86,5 % der Theorie)

NCO-Gehalt (berechnet) = 33,3 %
NCO-Gehalt (gefunden) = 32,4 %
Chlorgehalt = 0,07 %

| Analyse | | | | | |
|---|---|---|---|---|---|
| Element | C | H | N | O | S |
| Berechnet | 47,6 | 3,2 | 11,1 | 25,4 | 12,7 |
| Gefunden | 47,7 | 3,3 | 10,9 | 25,2 | 12,9 |

## Beispiel 4

a) 2-(2'-Aminoethylsulfoxo)-anilin

1 Mol 2-(2-Aminoethylthio)-anilin wird wie in Beispiel 3a) beschrieben ins Bisacetanilid überführt. Das Bisacetanilid wird in 700 ml Wasser vorgelegt und bei 10 °C mit 1,1 Mol 35 %ige $H_2O_2$ Lösung tropfenweise versetzt. Man rührt 5 h bei 20 °C nach und versetzt vorsichtig mit 2,5 Mol NaOH zur Zerstörung überschüssiger $H_2O_2$-Lösung. Zur Abspaltung der Acetylgruppen wird die Reaktionsmischung 1,5 h bei 100 °C gekocht, die organische Phase heiß abgetrennt und über $Na_2SO_4$ getrocknet.

| Analyse | | | | | |
|---|---|---|---|---|---|
| Element | C | H | N | O | S |
| Berechnet | 52,2 | 6,5 | 15,2 | 8,7 | 17,4 |
| Gefunden | 52,4 | 6,4 | 14,9 | 8,8 | 17,5 |

b) 2-(2'-Isocyanatoethylsulfoxo)-phenylisocyanat

In eine Lösung von 200 g Phosgen in 1,5 l Chlorbenzol werden bei −5 °C innerhalb von 10 Minuten 184 g (1 Mol) 2-(2'-Aminoethylsulfoxo)anilin, gelöst in 1 l Chlorbenzol, getropft. Danach wird wie unter Beispiel 1 beschrieben weiter verfahren. Erhalten werden 205 g 2-(2'-Isocyanatoethyl-Sulfoxo-)phenylisocyanat (87 % der Theorie).

NCO-Gehalt (berechnet) = 35,6 %
NCO-Gehalt (gefunden) = 35,5 %
Chlorgehalt = 0,01 %

| Analyse | | | | | |
|---|---|---|---|---|---|
| Element | C | H | N | O | S |
| Berechnet | 50,8 | 3,4 | 11,9 | 20,3 | 13,5 |
| Gefunden | 51 | 3,4 | 11,7 | 20,1 | 13,7 |

## Beispiel 5

a) 2-(6'-Aminohexylsulfono)-anilin

1 Mol 2-(6-Aminohexylthio)anilin wird wie in Beispiel 3a) beschrieben ins Bis-acetanilid überführt. Das Bisacetanilid wird in 800 ml Wasser vorgelegt und die Mischung bei 80 °C mit 2,5 Mol 35 %ige $H_2O_2$-Lösung tropfenweise versetzt. Man rührt bei 100 °C nach, kühlt ab und versetzt mit 2,5 Mol NaOH. Man kocht eine weitere Stunde bei 100 °C zur Abspaltung der Acetyl-Gruppen. Die organische Phase wird heiß abgetrennt und über $Na_2SO_4$ getrocknet.

| Analyse | | | | | |
|---|---|---|---|---|---|
| Element | C | H | N | O | S |
| Berechnet | 56,2 | 7,8 | 10,9 | 12,5 | 12,5 |
| Gefunden | 56,2 | 7,6 | 11 | 12,5 | 12,6 |

b) 2-(6'-Isocyanatohexylsulfono)-phenylisocyanat

In eine Lösung von 200 g Phosgen in 2 l Chlorbenzol werden bei −10 °C innerhalb von 10 Minuten 128 g (0,5 Mol) 2-(6'-Aminohexylsulfono)-anilin, gelöst in 1,0 l Chlorbenzol, getropft. Danach wird wie unter Beispiel 1 beschrieben weiter verfahren. Erhalten werden 123 g 2-(6-Isocyanatohexyl-sulfono)-phenylisocyanat (80 % der Theorie).

NCO-Gehalt (berechnet) = 27,3 %
NCO-Gehalt (gefunden) = 26,9 %
Chlorgehalt = 0,03 %

Analyse

| Element | C | H | N | O | S |
|---|---|---|---|---|---|
| Berechnet | 54,5 | 5,2 | 9,1 | 20,8 | 10,4 |
| Gefunden | 54,3 | 5,5 | 9 | 20,7 | 10,5 |

Beispiel 6

a) 2,4'-Diamino-diphenylsulfid

Zu 1 Mol o-Aminothiophenol-Na-Lösung in 400 ml Wasser werden 200 ml Methanol hinzugefügt und bei 80 °C eine warme Lösung von 4-Nitrochlorbenzol in 300 ml Methanol zugetropft. Man rührt 4 Stunden unter Rückfluß nach und kühlt ab. Es wird abgesaugt, mit Wasser gewaschen und getrocknet. 1 Mol der Nitro-amino-Verbindung wird in Methanol gelöst und nach bekannten Verfahren mit Ra-Ni zum Diamin hydriert.

Analyse

| Element | C | H | N | S |
|---|---|---|---|---|
| Berechnet | 66,7 | 5,5 | 13 | 14,8 |
| Gefunden | 66,5 | 5,7 | 12,8 | 15 |

b) 2,4'-Diisocyanatodiphenylsulfid

In eine Lösung 600 g Phosgen in 1,8 l Chlorbenzol werden bei −10 bis 0 °C innerhalb von 35 Minuten 324 g (1,51 Mol) 2,4'-Diaminodiphenylsulfid, gelöst in 1,8 l Chlorbenzol, eingetropft. Anschließend wird während eines Zeitraums von 1,5 Stunden bis zum Rückfluß erhitzt (130 °C). Ab 80 °C wird dabei weiteres Phosgen in die Lösung eingeleitet. Anschließend wird unter weiterem Einleiten von Phosgen 2 Stunden auf Rückflußtemperatur erhitzt. Schließlich wird unter allmählichem Abkühlen der Reaktionslösung Phosgen durch 45-minütiges Einleiten von Stickstoff ausgespült, die Lösung eingeengt und das Produkt unter Vakuum destilliert. Es werden 361 g (1,35 Mol) 2,4'-Diisocyanatodiphenylsulfid (89,8 % der Theorie) erhalten.

NCO-Gehalt (berechnet) = 31,34 %
NCO-Gehalt (gefunden) = 31,3 %
Chlorgehalt = 0,05 %

Analyse

| Element | C | H | N | O | S |
|---|---|---|---|---|---|
| Berechnet | 62,7 | 3 | 10,4 | 11,9 | 11,9 |
| Gefunden | 62,8 | 2,9 | 10,3 | 12,1 | 11,8 |

Beispiel 7

a) 2,4'-Diamino-diphenylsulfon

1 Mol des in Beispiel 6a beschriebenen Diamins wird wie in Beispiel 3 beschrieben mit Acetylchlorid umgesetzt und mit 2,5 Mol einer $H_2O_2$-Lösung oxidiert. Als Lösungsmittel werden 300 ml Eisessig verwendet. Nach Abspaltung der Acetyl-Gruppen mit NaOH wird die organische Phase von der wäßrigen Lösung abgetrennt, in Methylenchlorid aufgenommen und über $Na_2SO_4$ getrocknet. Methylenchlorid wird unter Vakuum entfernt.

Analyse

| Element | C | H | N | O | S |
|---|---|---|---|---|---|
| Berechnet | 58 | 4,8 | 11,3 | 12,9 | 12,9 |
| Gefunden | 57,9 | 4,8 | 11,2 | 13,1 | 12,9 |

b) 2,4'-Diisocyanatodiphenylsulfon

In eine Lösung von 450 g Phosgen in 2,2 l Chlorbenzol werden bei −10 bis 0 °C innerhalb von 35 Minuten 248 g (1 Mol) 2,4'-Diaminodiphenylsulfon, gelöst in 1,5 l Chlorbenzol, eingetropft. Danach

wird wie unter Beispiel 1 beschrieben weiter verfahren. Erhalten werden 285 g 2,4'-Diisocyanatodiphenylsulfon (95 % der Theorie).

NCO-Gehalt (berechnet) = 28 %
NCO-Gehalt (gefunden) = 27,6 %
Chlorgehalt = 0,015 %

| Analyse | | | | | |
|---|---|---|---|---|---|
| Element | C | H | N | O | S |
| Berechnet | 56 | 2,7 | 9,3 | 21,3 | 10,7 |
| Gefunden | 56 | 2,8 | 9,1 | 21,4 | 10,7 |

Beispiel 8

a) 2,4'-Diamino-diphenyl-sulfoxid

1 Mol des in Beispiel 6a beschriebenen Diamins wird wie in Beispiel 3 beschrieben mit Acetylchlorid umgesetzt und mit 1 Mol einer $H_2O_2$-Lösung oxidiert. Als Lösungsmittel werden 300 ml Eisessig verwendet. Nach Abspaltung der Acetylgruppen mit NaOH wird das 2,4'-Diaminodiphenylsulfoxid erhalten.

| Analyse | | | | | |
|---|---|---|---|---|---|
| Element | C | H | N | O | S |
| Berechnet | 62 | 5,2 | 12,1 | 6,9 | 13,8 |
| Gefunden | 62,2 | 5 | 12 | 7 | 13,8 |

b) 2,4'-Diisocyanatodiphenylsulfoxid

In eine Lösung von 300 g Phosgen in 1 l Chlorbenzol werden bei −10 bis 0 °C innerhalb von 20 Minuten 332 g (1,5 Mol) 2,4'-Diaminodiphenylsulfoxid gelöst, in 2 l Chlorbenzol, eingetropft. Danach wird wie unter Beispiel 1 beschrieben weiter verfahren. Erhalten werden 410 g 2,4'-Diisocyanatodiphenylsulfoxid (96,5 % der Theorie).

NCO-Gehalt (berechnet) = 29,6 %
NCO-Gehalt (gefunden) = 29,1 %
Chlorgehalt = 0,035 %

| Analyse | | | | | |
|---|---|---|---|---|---|
| Element | C | H | N | O | S |
| Berechnet | 59,1 | 2,8 | 9,8 | 16,9 | 11,3 |
| Gefunden | 59,2 | 2,7 | 9,9 | 16,8 | 11,3 |

Beispiel 9

a) 2,4'-Diamino-3'-chlordiphenylsulfid

Zu 1 Mol o-Aminothiophenol Na-Lösung in 400 ml Wasser und in 200 ml Methanol werden bei 80 °C eine warme Lösung von 1 Mol 2,4-Dichlornitrobenzol in 350 ml Methanol zugetropft. Man rührt 4 Stunden unter Rückfluß nach, kühlt ab und verdünnt mit 1 l Eiswasser. Es wird abgesaugt, mit Wasser gewaschen und getrocknet. 1 Mol der Mononitroverbindung wird in Methanol gelöst und nach bekannten Verfahren mit Ra-Ni zum Diamin hydriert.

| Analyse | | | | | |
|---|---|---|---|---|---|
| Element | C | H | N | S | Cl |
| Berechnet | 57,5 | 4,4 | 11,2 | 12,8 | 14,2 |
| Gefunden | 57,3 | 4,4 | 11,1 | 12,7 | 14,9 |

b) 2,4'-Diisocyanato-3'-chlor-diphenylsulfid

In eine Lösung von 300 g Phosgen in 0,8 l Chlorbenzol werden bei −10 bis 0 °C innerhalb von 20 Minuten 158 g (0,632 Mol) 2,4'-Diamino-3'-chlor-diphenylsulfid, gelöst in 0,8 l Chlorbenzol, eingetropft. Danach wird wie unter Beispiel 1 beschrieben weiter verfahren. Es werden 188 g 2,4'-Diisocyanato-3'-chlor-diphenylsulfid (97,9 % der Theorie) erhalten.

NCO-Gehalt (berechnet) = 27,76 %
NCO-Gehalt (gefunden) = 26,94 %
Chlorgehalt = 0,04 %

Beispiel 10

a) 2,4'-Diamino-3'-chlor-diphenylsulfon

1 Mol des in Beispiel 9 beschriebenen Diamins wird wie in Beispiel 3 beschrieben, mit Acetylchlorid in Bis-acetamid überführt. 1 Mol des Bisacetamids wird in 300 ml Eisessig gelöst und mit 2,5 Mol einer 30 %igen $H_2O_2$-Lösung oxidiert. Nach Abspaltung der Acetyl-Gruppen mit NaOH wird die organische Phase abgetrennt in Methylenchlorid aufgenommen und über $Na_2SO_4$ getrocknet. Methylenchlorid wird unter Vakuum entfernt.

Analyse

| Element | C | H | N | O | S | Cl |
|---|---|---|---|---|---|---|
| Berechnet | 51 | 3,9 | 9,9 | 11,3 | 11,3 | 12,5 |
| Gefunden | 50,9 | 4,0 | 9,7 | 11,3 | 11,5 | 12,6 |

b) 2,4'-Diisocyanato-3'-chlordiphenylsulfon

In eine Lösung von 300 g Phosgen in 1,2 l Chlorbenzol werden bei −10 bis 0 °C innerhalb von 25 Minuten 282,5 g (1 Mol) 2,4'-Diamino-3'-chlor-diphenylsulfon, gelöst in 2 l Chlorbenzol, eingetropft. Danach wird wie unter Beispiel 1 beschrieben weiter verfahren. Erhalten werden 300 g 2,4'-Diisocyanato-3'-chlordiphenylsulfon (90,0 % der Theorie).

NCO-Gehalt (berechnet) = 25,1 %
NCO-Gehalt (gefunden) = 24,7 %
Chlorgehalt = 0,05 %

Analyse

| Element | C | H | N | O | S | Cl |
|---|---|---|---|---|---|---|
| Berechnet | 50,2 | 2,1 | 8,4 | 19,1 | 9,6 | 10,6 |
| Gefunden | 50,1 | 2,1 | 8,2 | 19,0 | 9,8 | 10,8 |

Beispiel 11

a) 2,4'-Diamino-3'-ethyldiphenylsulfid

Zu 1 Mol p-Aminothiophenol-Na-Lösung in 400 ml Wasser werden 200 Methanol hinzugefügt und bei 80 °C eine warme Lösung von 2-Chlornitrobenzol in 300 ml Methanol zugetropft. Man rührt 3 Stunden unter Rückfluß nach, kühlt ab, verdünnt mit 1 l Eiswasser, saugt ab, wäscht mit Wasser und trocknet. 0,5 Mol 2-Nitro-4'-aminodiphenylsulfid, 1 g Aluminiumspäne und 0,01 g Sublimat werden in einem Hochdruckautoklaven erhitzt und Ethylen aufgepreßt. Nach 2 bis 3 Stunden ist die Reaktion beendet. Das Reaktionsgemisch wird mit Natronlauge versetzt, die organische Phase abgetrennt, in Methanol gelöst und nach bekannten Verfahren mit Ra-Nickel zum Diamin hydriert.

Analyse

| Element | C | H | N | S |
|---|---|---|---|---|
| Berechnet | 68,8 | 6,5 | 11,5 | 13,1 |
| Gefunden | 68,9 | 6,5 | 11,3 | 13,2 |

b) 2,4'-Diisocyanato-3'-ethyl-diphenylsulfid

In eine Lösung von 300 g Phosgen in 1 l Chlorbenzol werden bei −10 bis 0 °C innerhalb von 25 Minuten 245 g (1 Mol) 2,4'-Diamino-3'-ethyl-diphenylsulfid, gelöst in 0,8 l Chlorbenzol, eingetropft. Danach wird wie unter Beispiel 1 beschrieben weiter verfahren. Erhalten werden 271 g 2,4'-Diisocyanato-3'-ethyl-diphenylsulfid (91,2 % der Theorie).

NCO-Gehalt (berechnet) = 28,3 %
NCO-Gehalt (gefunden) = 27,8 %
Chlorgehalt = 0,03 %

Analyse

| Element | C | H | N | O | S |
|---|---|---|---|---|---|
| Berechnet | 64,9 | 4,1 | 9,4 | 10,8 | 10,8 |
| Gefunden | 64,8 | 4,2 | 9,3 | 10,7 | 10,9 |

Beispiel 12

a) 2,4'-Diamino-3'-ethylmercaptodiphenylsulfid

Zu 1 Mol o-Aminothiophenol-Na-Lösung in 400 ml Wasser werden 200 ml Methanol hinzugefügt und bei 80 °C eine warme Lösung von 1 Mol 4-Chlor-2-ethylmercapto-1-nitrobenzol in 400 ml Methanol zugetropft. Man rührt 4 Stunden unter Rückfluß nach, kühlt ab und verdünnt mit 1,5 l Eiswasser. Es wird abgesaugt, mit Wasser gewaschen und getrocknet. 1 Mol der Nitroamino-Verbindung wird in Methanol gelöst und nach bekannten Verfahren mit Ra-Ni zum Diamin hydriert.

| Analyse | | | | |
|---|---|---|---|---|
| Element | C | H | N | S |
| Berechnet | 60,8 | 5,8 | 10,1 | 23,2 |
| Gefunden | 60,8 | 5,7 | 10,2 | 23,3 |

b) 2,4'-Diisocyanato-3'-ethylmercaptodiphenylsulfid

In eine Lösung von 600 g Phosgen in 1,9 l Chlorbenzol werden bei −10 bis 0 °C innerhalb von 40 Minuten 415 g (1,5 Mol) 2,4'-Diamino-3'-ethylmercapto-diphenylsulfid, gelöst in 1,8 l Chlorbenzol, eingetropft. Danach wird wie unter Beispiel 1 beschrieben weiter verfahren. Erhalten werden 431 g 2,4'-Diisocyanato-3'-ethylmercaptodiphenylsulfid (87,2 % der Theorie).

NCO-Gehalt (berechnet) = 25,5 %
NCO-Gehalt (gefunden) = 25,1 %
Chlorgehalt = 0,04 %

| Analyse | | | | | |
|---|---|---|---|---|---|
| Element | C | H | N | O | S |
| Berechnet | 58,5 | 3,7 | 8,5 | 9,7 | 19,5 |
| Gefunden | 58,6 | 3,7 | 8,3 | 9,8 | 19,6 |

## Beispiel 13

a) 2,4'-Diamino-5-methoxy-diphenylsulfid

Zu 1 Mol p-Aminothiophenol-Na-Lösung in 400 ml Wasser werden 200 ml Methanol zugefügt und bei 80 °C eine warme Lösung von 3-Chlor-4-nitro-1-methoxy-benzol in 400 ml Methanol zugetropft. Man rührt 3 Stunden unter Rückfluß nach, kühlt ab und verdünnt mit 1 l Eiswasser. Es wird abgesaugt, mit Wasser gewaschen und getrocknet. 1 Mol der Nitro-amino-Verbindung wird in Methanol gelöst und nach bekannten Verfahren mit Ra-Ni zum Diamin hydriert.

| Analyse | | | | | |
|---|---|---|---|---|---|
| Element | C | H | N | O | S |
| Berechnet | 63,4 | 5,7 | 11,4 | 6,5 | 13 |
| Gefunden | 63,2 | 5,7 | 11,3 | 6,7 | 13,1 |

b) 2,4'-Diisocyanato-5-methoxy-diphenylsulfid

In eine Lösung von 400 g Phosgen in 1 l Chlorbenzol werden bei −5 bis 0 °C innerhalb von 30 Minuten 246 g (1 Mol) 2,4'-Diamino-5-methoxy-diphenylsulfid, gelöst in 1,3 l Chlorbenzol, eingetropft. Danach wird wie unter Beispiel 1 beschrieben weiter verfahren. Erhalten werden 256 g 2,4'-Diisocyanato-5-methoxy-diphenylsulfid (86 % der Theorie).

NCO-Gehalt (berechnet) = 28,2 %
NCO-Gehalt (gefunden) = 27,9 %
Chlorgehalt = 0,04 %

| Analyse | | | | | |
|---|---|---|---|---|---|
| Element | C | H | N | O | S |
| Berechnet | 60,4 | 3,3 | 9,1 | 16,1 | 10,7 |
| Gefunden | 60,5 | 3,3 | 9,2 | 16,1 | 10,9 |

## Verwendungsbeispiele

## Beispiel 14 (Vergleichsbeispiel)

100 Gew.-Teile eines Prepolymeren mit einem NCO-Gehalt von 3,7 %, hergestellt aus einem Polypropylenglykol-Polyethergemisch, bestehend aus 45 Teilen eines linearen, bifunktionellen Polyethers vom $\overline{MG}$ = 2 000,45 Teilen eines linearen Polyethers vom $\overline{MG}$ = 1 000 und 5 Teilen eines verzweigten trifunktionellen Polyethers vom $\overline{MG}$ = 4 800 und 20,5 Gew.-Teilen 2,4-Toluylendiisocyanat werden bei 60 °C mit 11,3 Gew.-Teilen 3,5-Diamino-4-methylbenzoesäure-2-ethylhexylester vermischt (NCO: NH = 1,1). Das Gemisch bleibt 45 Sekunden bei 60 °C gießbar, wird in eine auf 110 °C vorgeheizte Form gegossen und kann bei dieser Temperatur nach 3,5 Minuten entformt werden. Die Knickbruchfestigkeit wird bei dieser Temperatur nach 7 Minuten erreicht. Nach einer Temperzeit von 24 Stunden bei 110 °C wird ein Elastomeres mit folgenden mechanischen Eigenschaften erhalten :

Zugfestigkeit DIN 53504 21,7 MPa
Bruchdehnung DIN 53504 724 %

Weiterreißwiderstand DIN 53515 36,5 KN/m
Shore A DIN 53505 87
Elastizität DIN 53512 55 %

Beispiel 15 (Vergleichsbeispiel)

100 Gew.-Teile eines Prepolymeren mit einem NCO-Gehalt von 3,6 % NCO, hergestellt aus dem Polypropylenglykol-Polyether-Gemisch nach Beispiel 14 und 29,47 Gew.-Teilen 4,4-Diisocyanatodiphenylmethan werden bei 60 °C mit 10,83 Gew.-Teilen 3,5-Diamino-4-methyl-benzoesäure-2-ethylhexylester vermischt (NCO: $NH_2$ = 1,1). Das Gemisch bleibt 1 Minute bei 60 °C gießbar, wird in eine auf 110 °C vorgeheizte Form gegossen und kann bei dieser Temperatur nach 45 Sekunden entformt werden. Die Knickbruchfestigkeit wird bei dieser Temperatur nach 7,5 Minuten erreicht. Nach einer Temperzeit von 24 Stunden bei 110 °C wird ein Elastomeres mit folgenden mechanischen Eigenschaften erhalten.
Zugfestigkeit DIN 53504 21,1 MPa
Bruchdehnung DIN 53504 812 %
weiterreißfestigkeit DIN 53515 36,6 KN/m
Shore A DIN 53505 84
Elastizität DIN 53512 38 %

Beispiel 16 (erfindungsgemäß)

100 Gew.-Teile eines Prepolymeren mit einem NCO-Gehalt von 3,55 %, hergestellt aus dem Polypropylenglykol-Polyether-Gemisch nach Beispiel 14 und 31,63 Gew.-Teilen eines erfindungsgemäßen schwefelaufweisenden Diisocyanats (2,4'-Diisocyanatodiphenylsulfid) werden bei 60 °C mit 10,82 Gew.-Teilen 3,5-Diamino-4-methyl-benzoesäure-2-ethylhexylester vermischt (NCO: $NH_2$ = 1,1). Das Gemisch bleibt 1,5 Minuten bei 70 °C gießbar, wird in eine auf 110 °C vorgeheizte Form gegossen und kann bei dieser Temperatur nach 1 Minute entformt werden. Die Knickbruchfestigkeit wird nach 2 Minuten erreicht. Nach einer Temperzeit von 24 Stunden bei 110 °C wird ein Elastomeres mit folgenden mechanischen Eigenschaften erhalten.
Zugfestigkeit DIN 53504 18,9 MPa
Bruchdehnung DIN 53504 816 %
Weiterreißwiderstand DIN 53515 38,9 KN/m
Shore A DIN 53505 75
Elastizität DIN 53512 47 %

Beispiel 17 (Vergleichsbeispiel)

100 Gew.-Teile eines Prepolymeren vom NCO-Gehalt von 4,4 % NCO, hergestellt aus dem Polypropylenglykol-Polyether-Gemisch nach Beispiel 14 und 25,95 Gew.-Teilen 2,4-Toluylendiisocyanat werden bei 60 °C mit 13,86 Gew.-Teilen 3,5-Diamino-4-methyl-benzoesäure-2-ethylhexylester vermischt (NCO : $NH_2$ = 1,05). Das Gemisch bleibt 40 Sekunden bei 60 °C gießbar, wird in eine auf 80 °C vorgeheizte Form gegossen und kann nach 4 Minuten bei dieser Temperatur entformt werden. Die Knickbruchfestigkeit wird bei dieser Temperatur nach 7 Minuten erreicht. Nach einer Temperatur von 24 Stunden bei 80 °C wird ein Elastomeres mit folgenden mechanischen Eigenschaften erhalten.
Zugfestigkeit DIN 53504 24,9 MPa
Bruchdehnung DIN 53504 602 %
Weiterreißwiderstand DIN 53515 39,6 KN/m
Shore A DIN 53505 90
Elastizität DIN 53512 44

Beispiel 18

100 Gew.-Teile eines Prepolymeren vom NCO-Gehalt von 4,38 % NCO aus dem Polypropylenglykol-Polyethergemisch nach Beispiel 15 und 39,75 Gew.-Teilen eines erfindungsgemäßen Schwefel enthaltenden Diisocyanats (2,4'-Diisocyanato-diphenylsulfid) werden bei 60 °C mit 13,84 Gew.-Teilen 3,5-Diamino-4-methyl-benzoesäure-2-ethylhexylester vermischt (NCO: $NH_2$ = 1,05). Das Gemisch bleibt 1 Minute bei 60 °C gießbar, wird in eine auf 80 °C vorgelegte Form gegossen und kann nach 1,5 Minuten entformt werden. Die Knickbruchfestigkeit wird bei 80 °C nach 1,5 Minuten erreicht. Nach einer Temperzeit von 24 Stunden bei 80 °C wird ein Elastomeres mit folgenden mechanischen Werten erhalten.
Zugfestigkeit DIN 53504 24,6 MPa
Bruchdehnung DIN 53504 650 %
Weiterreißwiderstand DIN 53515 35,4 KN/m
Shore A DIN 53505 79
Elastizität DIN 53512 35 %

## Beispiel 19

100 Gew.-Teile des Prepolymeren nach Beispiel 18 werden mit 14,69 Gew.-Teilen 4,4'-Diamino-3,3'-5,5'-tetraethyldiphenylmethan bei 60 °C vermischt ($NCO:NH_2 = 1,05$). Das Gemisch bleibt 0,5 Minuten bei 60 °C gießbar, wird in eine auf 80 °C vorgeheizte Form gegossenund kann bei dieser Temperatur nach 1,5 Minuten entformt werden. Die Knickbruchfestigkeit wird nach 1,5 Minuten bei 80 °C erreicht. Nach einer Temperzeit von 24 Stunden bei 80 °C wird ein Elastomeres mit folgenden mechanischen Eigenschaften erhalten.

Zugfestigkeit DIN 53504 29,5 MPa
Bruchdehnung DIN 53504 635 %
Weiterreißwiderstand DIN 53515 30 KN/m
Shore A DIN 53505 72
Elastizität DIN 53512 25 %

## Beispiel 20

100 Gew.-Teile eines Prepolymeren vom NCO-Gehalt von 4,41 % aus dem Polyether-Gemisch nach Beispiel 14 und 44,86 Gew.-Teilen eines erfindungsgemäßen Schwefel enthaltenden Diisocyanats (2,4'-Diisocyanato-3'-chlordiphenylsulfid) werden bei 80 °C mit 13,86 Gew.-Teilen 3,5 Diamino-4-methylbenzoesäure-2-ethylhexylester vermischt ($NCO: NH_2 = 1,05$). Das Gemisch bleibt bei 80 °C 2 Minuten gießbar, wird in eine auf 80 °C vorgeheizte Form gegossen und kann nach 3,5 Minuten entformt werden. Die Knickbruchfestigkeit wird bei 80 °C nach 3,5 Minuten erreicht. Nach einer Temperzeit von 24 Stunden bei 80 °C wird ein Elastomeres mit folgenden mechanischen Werten erhalten.

Zugfestigkeit DIN 53504 24,5 MPa
Bruchdehnung DIN 53504 640 %
Weiterreißwiderstand DIN 53515 42 KN/m
Shore A DIN 53505 82
Elastizität DIN 53512 32 %

## Beispiel 21

100 Gew.-Teile des Prepolymeren vom NCO-Gehalt 4,35 % aus dem Polypropylenglykol-Polyethergemisch nach Beispiel 14 und 43,9 Gew.-Teilen eines erfindungsgemäßen Schwefel enthaltenden Diisocyanates (2,4'-Diisocyanato-3'-ethyldiphenylsulfid) werden bei 60 °C mit 13,84 Gew.-Teilen 3,5-Diamino-4-methylbenzoesäureethylester vermischt ($NCO: NH_2 = 1,05$). Das Gemisch bleibt bei 60 °C 2 Minuten gießbar, wird in eine auf 80 °C vorgeheizte Form gegossen und kann nach 2 Minuten entformt werden. Nach einer Temperzeit von 24 Stunden bei 80 °C wird ein Elastomeres mit folgenden mechanischen Werten erhalten.

Zugfestigkeit DIN 53504 83,8 MPa
Bruchdehnung DIN 53504 730 %
Weiterreißwiderstand DIN 53515 39,3 KN/m
Shore A DIN 53505 82
Elastizität DIN 53512 36 %

## Beispiel 22 (Vergleichsbeispiel)

100 Gew.-Teile eines Prepolymeren mit einem NCO-Gehalt von 2,85 %, hergestellt aus einem Polyetherpolyol-Gemisch bestehend aus 80 Gew.-Teilen eines linearen, bifunktionellen Polyethers vom $\overline{MG} = 4\,000$, 20 Gew.-Teilen eines trifunktionellen, verzweigten Polyethers vom $\overline{MG} = 4\,800$ und 16,25 Gew.-Teilen eines flüssigen Diisocyanatodiphenylmethans vom NCO-Gehalt = 33,6 % werden bei 60 °C mit 8,83 Gew.-Teilen 3,5-Diamino-4-methyl-benzoesäure-2-ethyl-hexylester vermischt ($NCO: HN_2 = 1,05$). Das Gemisch bleibt 1 Minute bei 60 °C gießbar, wird in eine auf 80 °C vorgeheizte Form gegossen und kann bei dieser Temperatur nach 10 Minuten entformt werden. Die Knickbruchfestigkeit wird bei dieser Temperatur nach 24 Minuten erreicht. Nach einer Temperzeit von 24 Stunden bei 80 °C wird ein Elastomeres mit folgenden mechanischen Werten erhalten.

Zugfestigkeit DIN 53504 10,45 MPa
Bruchdehnung DIN 53504 994 %
Weiterreißwiderstand DIN 53515 18,7 KN/m
Shore A DIN 53505 70
Elastizität DIN 53512 45

## Beispiel 23

100 Gew.-Teile eines Prepolymeren mit einem NCO-Gehalt von 2,8 %, hergestellt aus dem Polyether-Polyol-Gemisch nach Beispiel 22 und 17,65 Gew.-Teilen eines erfindungsgemäßen Schwefel enthaltenden Diisocyanats (2,4'-Diisocyanatodiphenylsulfid) werden bei 60 °C mit 8,82 Gew.-Teilen des Diamins aus Beispiel 22 vermischt (NCO: $NH_2$ = 1,05). Das Gemisch bleibt 1,5 Minuten bei 60 °C gießbar, wird in eine auf 80 °C vorgeheizte Form gegossen und kann bei dieser Temperatur nach 10 Minuten entformt werden. Die Knickbruchfestigkeit wird bei dieser Temperatur nach 16 Minuten erreicht. Nach einer Temperzeit von 24 Stunden bei 80 °C wird ein Elastomeres mit folgenden mechanischen Werten erhalten.

Zugfestigkeit DIN 53504 9,8 MPa
Bruchdehnung DIN 53504 1128 %
Weiterreißwiderstand DIN 53515 22,1 KN/m
Shore A DIN 53505 64
Elastizität DIN 53512 50

Beispiel 24

100 Gew.-Teile eines Prepolymeren mit einem NCO-Gehalt von 3,4 %, hergestellt aus einem linearen, bifunktionellen Polyesterdiol aus Adipinsäure und Ethylenglykol ($\overline{MG}$ = 2 000) und 30,6 Gew.-Teilen eines erfindungsgemäßen Diisocyanats (2-(6'-Isocyanatohexylthio)-phenylisocyanat) werden bie 80 °C mit 13,35 Gew.-Teilen 3,5-Diamino-4-chlorbenzoesäureisobutylester vermischt (NCO: $NH_2$ = 1,1). Das Gemisch bleibt 18 Minuten gießbar, wird in eine auf 110 °C vorgeheizte Form gegossen und kann nach 30 Minuten entformt werden. Nach einer Temperzeit von 24 Stunden bei 110 °C wird ein Elastomeres mit folgenden mechanischen Werten erhalten.

Zugfestigkeit DIN 53504 22,5 MPa
Bruchdehnung DIN 53504 780 %
Weiterreißwiderstand DIN 53515. 35 KN/m
Shore A DIN 53505 75
Elastizität DIN 53512 38 %

**Ansprüche** für die Vertragsstaaten BE, CH, LI, DE, FR, GB, IT, NL, SE

1. Diisocyanate der Formel

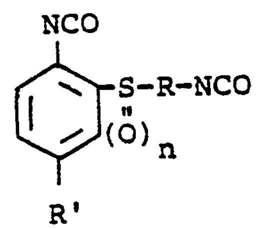

in welcher

R für einen gesättigten aliphatischen Kohlenwasserstoffrest mit 2 bis 12 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Brom- oder Chlor-Substituenten oder einen Substituenten der Formel – R", – O– R", – S– R" oder – $SO_2$– R", aufweisenden para-Phenylen-Rest steht,

R' für Wasserstoff, Brom, Chlor, – $SO_2$– R", – OR", oder – SR", steht,

R" für einen Alkylrest mit 1 bis 4 Kohlenstoffatomen steht und

n für 0, 1 oder 2 steht.

2. Diisocyanate der in Anspruch 1 genannten Formel, wobei

R für einen gesättigten aliphatischen Kohlenwasserstoffrest mit 2 bis 6 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Chlor- oder $C_1$-$C_4$-Alkyl-Substituenten aufweisenden, p-Phenylen-Rest steht,

R' für Wasserstoff steht und

n für 0 steht.

3. Verfahren zur Herstellung von Diisocyanaten gemäß Anspruch 1 und 2, dadurch gekennzeichnet, daß man Diamine der Formel

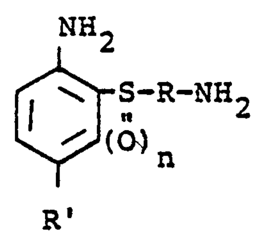

in welcher

R, R' und n die in Anspruch 1 und 2 genannte Bedeutung haben,

einer an sich bekannten Phosgenierungsreaktion unterzieht.

4. Verwendung der Diisocyanate gemäß Ansprüchen 1 und 2 als Aufbaukomponente bei der Herstellung von Polyurethankunststoffen nach dem Isocyanat-Polyadditonsverfahren.

**Ansprüche** für den Vertragsstaat : AT

1. Verfahren zur Herstellung von Diisocyanaten der Formel

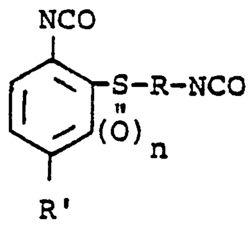

in welcher

R für einen gesättigten aliphatischen Kohlenwasserstoffrest mit 2 bis 12 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Brom- oder Chlor-Substituenten oder einen Substituenten der Formel $-R''$, $-O-R''$, $-S-R''$ oder $-SO_2-R''$, aufweisenden para-Phenylen-Rest steht,

R' für Wasserstoff, Brom, Chlor, $-SO_2-R''$, $-OR''$, oder $-SR''$, steht,

R'' für einen Alkylrest mit 1 bis 4 Kohlenstoffatomen steht und

n für 0, 1 oder 2 steht,

dadurch gekennzeichnet, daß man Diamine der Formel

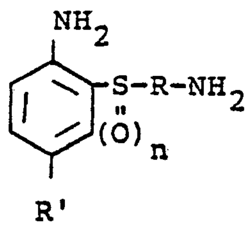

einer an sich bekannten Phosgenierungsreaktion unterzieht.

2. Verfahren zur Herstellung von Diisocyanaten der in Anspruch 1 genannten Formel, dadurch gekennzeichnet, daß man Diamine der in Anspruch 1 genannten Formel einer an sich bekannten Phosgenierungsreaktion unterzieht, wobei in den genannten Formeln

R für einen gesättigten aliphatischen Kohlenwasserstoffrest mit 2 bis 6 Kohlenstoffatomen, wobei zwischen der Isocyanatgruppe und dem Schwefelatom mindestens 2 Kohlenstoffatome angeordnet sind, oder einen, gegebenenfalls in mindestens einer ortho-Stellung zur Isocyanatgruppe einen Chlor- oder $C_1$-$C_4$-Alkyl-Substituenten aufweisenden, p-Phenylen-Rest steht,

R' für Wasserstoff steht und

n für 0 steht.

3. Verwendung der gemäß Anspruch 1 und 2 erhaltenen Diisocyanate als Aufbaukomponente bei der Herstellung von Polyurethankunststoffen nach dem Isocyanat-Polyadditionsverfahren.

**Claims** for the Contracting States : BE, CH, LI, DE, FR, GB, IT, NL, SE

1. Diisocyanates of the formula

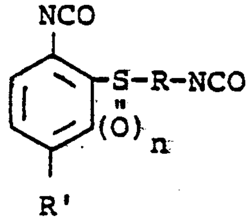

in which

R represents a saturated aliphatic hydrocarbon group having from 2 to 12 carbon atoms in which at least 2 carbon atoms are situated between the isocyanate group and the sulphur atom, or a paraphenylene group which optionally may have a bromine or chlorine substituent or a substituent of the formula R", O– R", S– R' or $SO_2$-R" in at least one ortho-position to the isocyanate group ;

R' represents hydrogen, bromine, chlorine, $SO_2$– R", OR" or SR" ;

R" represents an alkyl group having from 1 to 4 carbon atoms ; and

n represents 0, 1 or 2.

2. Diisocyanates of the formula given in Claim 1, wherein

R represents a saturated aliphatic hydrocarbon group having from 2 to 6 carbon atoms in which at least 2 carbon atoms are situated between the isocyanate group and the sulphur atom or a p-phenylene group which optionally may have a chlorine or $C_1$-$C_4$ alkyl substituent in at least one ortho-position to the isocyanate group,

R' represents hydrogen and

n represents 0.

3. Process for the production of diisocyanates according to Claim 1 and 2, characterised in that diamines of the formula

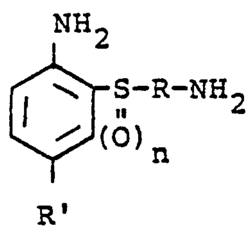

in which

R, R' and n have the meaning indicated in Claim 1 and 2, are subjected to a phosgenation reaction known per se.

4. Use of the diisocyanates according to Claims 1 and 2 as a structural component in the production of polyurethane plastics according to the isocyanate polyaddition process.

**Claims** for the Contracting State : AT

1. Process for the production of diisocyanates of the formula

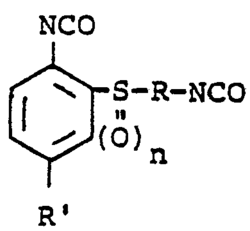

in which

R represents a saturated aliphatic hydrocarbon group having from 2 to 12 carbon atoms in which at least 2 carbon atoms are situated between the isocyanate group and the sulphur atom, or a paraphenylene group which optionally may have a bromine or chlorine substituent or a substituent of the formula R", O– R", S– R" or $SO_2$– R" in at least one ortho-position to the isocyanate group,

R' represents hydrogen, bromine, chlorine, $SO_2$– R", OR" or SR",

R" represents an alkyl group having from 1 to 4 carbon atoms and

n represents 0, 1 or 2,

characterised in that diamines of the formula

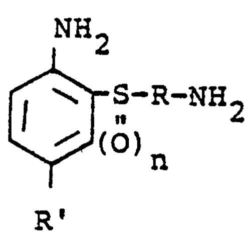

are subjected to a phosgenation reaction known per se.

2. Process for the production of diisocyanates of the formula given in Claim 1, characterised in that diamines of the formula given in Claim 1 are subjected to a phosgenation reaction known per se, and in the given formulae.

R represents a saturated aliphatic hydrocarbon radical having from 2 to 6 carbon atoms in which at least 2 carbon atoms are situated between the isocyanate group and the sulphur atom or a p-phenylene group which optionally may have a chlorine or $C_1$-$C_4$ alkyl substituent in at least one ortho-position to the isocyanate group,

R' represents hydrogen and

n represents 0.

3. Use of the diisocyanates obtained according to Claims 1 and 2 as a structural component in the production of polyurethane plastics according to the isocyanate polyaddition process.

**Revendications** pour les Etats contractants : BE, CH, LI, DE, FR, GB, IT, NL, SE

1. Des diisocyanates de formule :

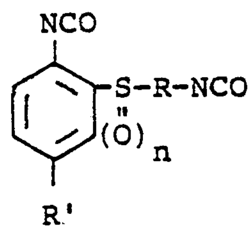

dans laquelle

R représente un reste d'hydrocarbure aliphatique saturé ayant 2 à 12 atomes de carbone, au moins 2 atomes de carbone étant disposés entre le groupe isocyanate et l'atome de soufre, ou représente un reste para-phénylène portant éventuellement en au moins l'une des positions ortho par rapport au groupe isocyanate, un substituant bromo ou chloro ou un substituant de formule – R", – O– R", – S – R"– , ou – $SO_2$– R",

R' représente de l'hydrogène, du brome, du chlore, un groupe – $SO_2$ – R", – OR" ou – SR",

R" est un reste alkyle ayant 1 à 4 atomes de carbone et

n est égal à 0, 1 ou 2.

2. Des diisocyanates de formule donnée dans la revendication 1, dans laquelle

R est un reste d'hydrocarbure aliphatique saturé ayant 2 à 6 atomes de carbone, au moins 2 atomes de carbone étant disposés entre le groupe isocyanate et l'atome de soufre, ou est un reste p-phénylène portant éventuellement un substituant chloro ou alkyle en $C_1$ à $C_4$ dans au moins l'une des positions ortho par rapport au groupe isocyanate,

R' est de l'hydrogène et

n est égal à 0.

3. Procédé de production de diisocyanates suivant les revendications 1 et 2, caractérisé en ce qu'on soumet des diamines de formule :

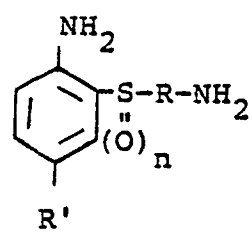

dans laquelle

R, R' et n ont la définition donnée dans les revendications 1 et 2,

à une réaction de phosgénation connue en soi.

4. Utilisation des diisocyanates suivant les revendications 1 et 2 comme composant structural dans la production de matières plastiques du type polyuréthanne par le procédé de poly-addition d'un isocyanate.

**Revendications** pour l'Etat contractant : AT

1. Procédé de production de diisocyanates de formule :

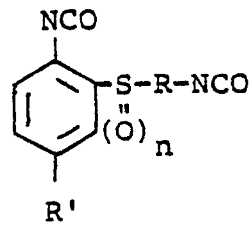

dans laquelle :

R représente un reste d'hydrocarbure aliphatique saturé ayant 2 à 12 atomes de carbone, au moins 2 atomes de carbone étant disposés entre le groupe isocyanate et l'atome de soufre, ou représente un reste paraphénylène portant éventuellement, en au moins l'une des positions ortho par rapport au groupe isocyanate, un substituant bromo ou chloro ou un substituant de formule – R″, – O– R″, – S– R″ ou – $SO_2$– R″,

R′ représente de l'hydrogène, du brome, du chlore, un groupe – $SO_2$– R″, – OR″ ou – SR″,

R″ est un reste alkyle ayant 1 à 4 atomes de carbone, et

n est égal à 0, 1 ou 2,

caractérisé en ce qu'on soumet des diamines de formule :

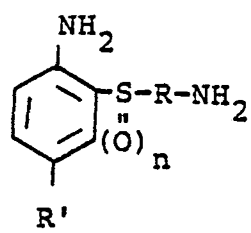

à une réaction de phosgénation connue en soi.

2. Procédé de production de diisocyanates de formule mentionnée dans la revendication 1, caractérisé en ce qu'on soumet des diamines de la formule mentionnée dans la revendication 1 à une réaction de phosgénation connue en soi, formules dans lesquelles :

R est un reste d'hydrocarbure aliphatique saturé ayant 2 à 6 atomes de carbone, au moins 2 atomes de carbone étant disposés entre le groupe isocyanate et l'atome de soufre, ou représente un reste paraphénylène portant éventuellement, dans au moins l'une des positions ortho par rapport au groupe isocyanate, un substituant chloro ou un substituant alkyle en $C_1$ à $C_4$,

R′ est de l'hydrogène, et

n est égal à 0.

3. Utilisation des diisocyanates obtenus conformément aux revendications 1 et 2 comme composant structural dans la production de matières plastiques du type polyuréthanne par le procédé de polyaddition d'un isocyanate.